# EUROPÄISCHE PATENTSCHRIFT

(11) **EP 2 191 687 B1**
(45) Veröffentlichungstag und Bekanntmachung des Hinweises auf die Patenterteilung: **12.01.2011**
(21) Anmeldenummer: 08784907.1
(22) Anmeldetag: 21.07.2008
(51) Int. Cl.: H05B 3/48, B29C 45/27

(54) **ELEKTRISCHE HEIZUNG ZUM ERWÄRMEN VON IM WESENTLICHEN ZYLINDRISCHEN OBJEKTEN**
ELECTRICAL HEATER FOR HEATING SUBSTANTIALLY CYLINDRICAL OBJECTS
RADIATEUR ÉLECTRIQUE POUR LE CHAUFFAGE D'OBJETS SENSIBLEMENT CYLINDRIQUES

(30) Priorität: 22.08.2007 DE 202007011746 U
(43) Veröffentlichungstag der Anmeldung: 02.06.2010
(73) Patentinhaber: Günther Heisskanaltechnik GmbH, 35066 Frankenberg/Eder (DE)
(72) Erfinder: GÜNTHER, Herbert, 35108 Allendorf/Eder (DE); SOMMER, Siegrid, 35099 Burgwald-Ernsthausen (DE); ZIMMERMANN, Frédéric, 35066 Frankenberg (DE)
(74) Vertreter: Buchhold, Jürgen
(86) Internationale Anmeldenummer: PCT/EP2008/005939
(87) Internationale Veröffentlichungsnummer: WO 2009/024224

(56) Entgegenhaltungen:
- WO-A-01/47684
- WO-A-01/54882
- WO-A-01/98054
- WO-A-2004/067255
- DE-U1- 20 211 328
- NL-A- 7 900 927
- US-A1- 2006 054 616

## Beschreibung

Die Erfindung betrifft eine elektrische Heizung zum Erwärmen von im Wesentlichen zylindrischen Objekten, insbesondere zum Erwärmen von Heisskanaldüsen für Heisskanalsysteme, gemäß dem Oberbegriff von Anspruch 1.

Elektrische Heizungen der zuvor genannten Art sind im Stand der Technik bekannt. So offenbart beispielsweise DE 199 41 038 A1 eine als Flachschichtheizung ausgebildete elektrische Heizung für Heisskanalsysteme, mit einer stoffschlüssig auf der Wandung eines Materialrohrs aufgebrachten Isolierschicht und einer darauf stoffschlüssig und in Form von Heizleiterbahnen aufgebrachten Heizschicht. Die Heizleiterbahnen erstrecken sich mäander- oder wellenartig sowohl in axialer als auch in tangentialer Richtung des Materialrohrs, wobei der Verlauf der Heizleiterbahnen an den lokalen Wärmezufuhrbedarf des Materialrohrs bzw. des darin geführten Materials angepasst ist, d.h. in stärker zu erwärmenden Bereichen sind die Heizleiterbahnen dichter angeordnet als in solchen Bereichen, in denen weniger Wärme zugeführt werden soll.

Das stoffschlüssige Aufbringen der Heizung in Schichten sorgt zwar für eine feste Verbindung mit der Wandung des Materialrohrs und damit für einen stets optimalen Wärmekontakt zur Oberfläche des zu beheizenden Heisskanalelements. Dennoch besteht die Gefahr, daß sich die Isolierschicht und/oder die Heizschicht von dem Materialrohr ablösen.

Bedingt durch den Innendruck im Materialrohr dehnt sich dessen Wandung während des Spritzgießvorgangs aus. Diese Ausdehnung überträgt sich auf die Isolierschicht und die Heizschicht, wodurch innerhalb der Schichten sowohl in tangentialer als auch in axialer Richtung Spannungen induziert werden. Dabei sind die in tangentialer Richtung bzw. in Umfangsrichtung laufenden Heizleiterbahnen weitaus stärker mechanisch belastet als die sich in radialer Richtung erstreckenden Heizleiterbahnen, was zu einer schnelleren Alterung und somit zu einem früheren Ausfall der tangentialen Heizleiterbahnen und damit der gesamten elektrischen Heizung führen kann. Betrachtet man zusätzlich die thermische Auswirkung der Ausdehnung auf die aktiven Heizleiterbahnen, so werden die in tangentialer Richtung verlaufenden Heizleiterbahnen im Vergleich zu denen, die in axialer Richtung des Materialrohrs verlaufen, verlängert, was zu einem höheren Widerstand der tangential verlaufenden Heizleiterbahn führt und somit zu einem höheren Spannungsabfall und zu einer höheren Leistung. Mithin werden die tangentialen Heizleiterbahnen stärker erwärmt; sie erreichen eine höhere Temperatur.

Darüber hinaus kann der Ausdehnungsvorgang in den tangential verlaufenden Heizleiterbahnen zur Mikroquerrissbildung führen, was wiederum zu einer Erhöhung des Widerstands und damit zur lokalen Erwärmung führen kann. Die Alterung der elektrischen Heizung wird beschleunigt; der Temperaturvedauf negativ beeinflußt. Schließlich wirken auf die sich in tangentialer Richtung bzw. in Umfangsrichtung erstreckenden Heizleiterbahnen bezogen auf die radiale Höhe, d.h. über den Dickenverlauf verteilt, in Bezug auf das Materialrohr unterschiedliche große Kräfte, während die Kräfte in den sich axial erstreckenden Heizleiterbahnen bezogen auf die radiale Höhe konstant bleiben.

Ein weiterer Umstand für lokal erhöhte Temperaturen der Heizleiterbahnen und somit für eine vorschnelle Alterung der Heizung ist die Anordnung der Heizbahnverteilung. Heizbahnen im Zentrum von homogenen Heizbahnverteilungen befinden sich durch die umgebende Leistungszufuhr auf einem höheren Temperaturniveau verglichen mit den umgebenden Heizleiterbahnen und werden entsprechend stärker thermisch belastet.

Ziel der Erfindung ist es, die zuvor beschriebenen Probleme zu überwinden und eine elektrische Heizung, eine Heisskanaldüse und eine Spritzgießvorrichtung zu schaffen, bei der die Ursachen für ein vorzeitiges Ausfallen der Heizung drastisch reduziert sind und bei der an denjenigen Positionen, wo es erwünscht ist, eine homogene Wärmeverteilung erreicht wird. Die Heizung soll ferner mit einfachen Mitteln kostengünstig aufgebaut sein und einen dauerhaft zuverlässigen Betrieb der Heißkanaldüse bzw. der Spritzgießvorrichtung gewährleisten.

Hauptmerkmale der Erfindung sind im kennzeichnenden Teil von Anspruch 1, 14 und 15 angegeben. Ausgestaltungen sind Gegenstand der Ansprüche 2 bis 17.

Bei einer Elektrische Heizung zum Erwärmen von im Wesentlichen zylindrischen Objekten, insbesondere zum Erwärmen von Heißkanaldüsen für Heißkanalsysteme, mit wenigstens einem im Wesentlichen zylindrischen Träger und mit wenigstens einer auf dem Träger aufgebrachten Heizleiterbahn, sieht die Erfindung vor, dass sich jede Heizleiterbahn - also jede Leiterbahn, die vorgesehen ist, um dem Objekt Wärme zuzuführen - im Wesentlichen in axialer Richtung des Trägers erstreckt, dass die Heizleiterbahnen durch leitende Bahnen elektrisch miteinander verbunden sind, wobei sich jede leitende Bahn im Wesentlichen in tangentialer Richtung des Trägers erstreckt, und wobei die leitenden Bahnen einen geringeren elektrischen Widerstand aufweisen als die Heizleiterbahnen.

Durch diese Ausbildung bzw. Anordnung der Heizleiterbahnen werden die Ausfallursachen von in Schichten aufgebauten elektrischen Heizvorrichtungen drastisch reduziert. Während die Heizleiterbahnen dazu dienen, dem zu heizenden Objekt eine bestimmte Wärmemenge zuzuführen, tragen die leitenden Bahnen dazu keinen Beitrag. Diese dienen vielmehr zum Verbinden der in axialer Richtung auf dem Materialrohr aufgebrachten Heizleiterbahnen.

Dadurch, dass die zur Erwärmung des Objektes dienenden Heizleiterbahnen im Wesentlichen in axialer Richtung des Trägers ausgebildet sind, werden diese kaum durch die sich während des Spritzvorgangs ändernden Belastungsbedingungen beeinträchtigt. Die sich tangential bzw. in Umfangsrichtung erstreckenden leitenden Bahnen hingegen, welche die Heizleiterbahnen elektrisch miteinander verbinden, werden zwar während des Spritzgießvorgangs stärker beansprucht, aufgrund ihres geringeren elektrischen Widerstandes wird jedoch die Temperaturbeanspruchung der leitenden Bahnen herabgesetzt, so dass sie den starken mechanischen Beanspruchungen problemlos standhalten können. Die Ausfallwahrscheinlichkeit der erfindungsgemäßen elektrischen Heizung wird damit stark verringert.

Um den leitenden Bahnen einen geringeren elektrischen Widerstand als den Heizleiterbahnen zu verleihen, sind diese bevorzugt aus einem Material hergestellt, das einen geringeren spezifischen Widerstand aufweist als derjenige der Heizleiterbahnen. Alternativ oder zudem können die leitenden Bahnen auch einen größeren Querschnitt aufweisen als die Heizleiterbahnen. Auf diese Weise wird sichergestellt, dass die thermische Belastung der leitenden Bahnen während des Betriebs der elektrischen Heizung geringer als diejenigen der Heizleiterbahnen ist, wodurch die hohen mechanischen Belastungen während des Spritzgießvorgangs, die in tangentialer Richtung des Trägers wirken, kompensiert werden.

Die Übergänge zwischen den Heizleiterbahnen und den leitenden Bahnen sind bevorzugt derart angeordnet, dass eine homogene Verteilung der Stromdichte in der Heizleiterbahn erreicht wird. Dazu sind die Übergänge zwischen den Heizleiterbahnen und den leitenden Bahnen bevorzugt in einen Winkel schräg zur Axialrichtung ausgebildet, wobei der Winkel vorteilhaft zwischen 0° und 90°, besser noch zwischen 0° und 40° liegt.

Zudem ist der jeweilige Abstand zwischen benachbart angeordneten Heizleiterbahnen bevorzugt derart gewählt, dass zur Erzielung einer homogenen Wärmeverteilung in dem zu erwärmenden Objekt eine inhomogene Leistungsverteilung verwendet wird. Das bedeutet beispielsweise, dass eine Heizleiterbahn, die zwischen zwei weiteren Heizleiterbahnen angeordnet ist, in einem größeren Abstand von den benachbarten Heizleiterbahnen positioniert ist als eine Heizleiterbahn, die nur eine oder gar keine benachbarte Heizleiterbahn aufweist.

Vorteilhaft sind Anschlusspads für die Heizleiterbahnen vorgesehen. Dabei sind die Übergänge zwischen den Heizteiterbahnen und den Anschlusspads bevorzugt senkrecht zur Axialrichtung ausgebildet, um auch hier die Verteilung der Stromdichte homogen zu halten.

Der Träger ist bevorzugt rohrförmig ausgebildet. Er kann aber auch einen ovalen oder einen anderen unrunden Querschnitt aufweisen.

Gemäß einer Ausgestaltung der vorliegenden Erfindung ist der Träger ein Materialrohr oder bildet ein solches. In diesem Fall ist auf dem Träger wenigstens eine Isolationsschicht aufgebracht, auf der dann die Heizleiterbahnen und die leitenden Bahnen ausgebildet sind. Die Isolationsschicht kann sich dabei über den gesamten Träger erstrecken. Alternativ kann sie auch nur unterhalb der Heizleiterbahnen und der leitenden Bahnen vorgesehen sein, wobei in diesem Falle die Breite der Isolationsbahn bevorzugt größer als die Breite der Heizleiterbahnen und die Breite der leitenden Bahnen ist.

Gemäß einer weiteren alternativen Ausgestaltung der vorliegenden Erfindung bildet der Träger eine Hülse, die auf das Materialrohr aufgeschoben wird. Diese Hülse kann aus einem metallischen Material hergestellt sein, wobei in diesem Fall auf die metallische Hülse ähnlich wie bei der zuvor beschriebenen Ausgestaltung eine Isolationsschicht aufgebracht wird, um die Bahnen von der metallischen Hülse zu isolieren. Alternativ kann die Hülse aus einem keramischen und somit isolierenden Werkstoff hergestellt sein, wobei dann die Bahnen direkt auf die Hülse aufgetragen werden können.

Die Isolationsbahnen und/oder die Heizleiterbahnen und/oder die leitenden Bahnen werden bevorzugt stoffschlüssig aufgebracht. Dies kann beispielsweise mittels Dickschichttechnik oder mittels Lasersintem erfolgen.

Bevorzugt ist die Isolationsschicht eine Dielektrikumschicht. Deren Ausbildung und Herstellung ist beispielsweise in DE 199 41 038 A1 beschrieben, auf deren Offenbarungsgehalt hiermit Bezug genommen wird.

Ferner ist zur Erfassung der aktuellen Temperatur bevorzugt ein Temperatursensor vorgesehen, der die Heizleiterbahn und/oder die leitenden Bahnen vorteilhaft nicht kreuzt.

Zudem bezieht sich die vorliegende Erfindung auf eine Heisskanaldüse mit einer erfindungsgemäßen Heizung sowie auf eine Spritzgießvorrichtung mit wenigstens einer solchen Heisskanaldüse.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Querschnittansicht einer Heisskanaldüse mit einer erfindungsgemäßen elektrischen Heizung;
- Fig. 2 bis 4: schematische Ansichten zum Erläutern der während des Betriebs der in Fig. 1 dargestellten Heisskanaldüse auftretenden Belastungen;
- Fig. 5: eine schematische Ansicht einer ersten Konstruktionsvariante der erfindungsgemäßen elektrischen Heizung;
- Fig. 6 und 7: schematische Ansichten, die verschiedene Varianten von Übergängen
- Fig. 8: zwischen Heizleiterbahnen und leitenden Bahnen zeigen; eine schematische Ansicht einer zweiten Konstruktionsvariante der erfindungsgemäßen elektrischen Heizung und;
- Fig. 9: eine dritte Konstruktionsvariante der erfindungsgemäßen Heizung.

Gleiche Bezugsziffern beziehen sich nachfolgend auf gleiche oder gleichartige Bauteile.

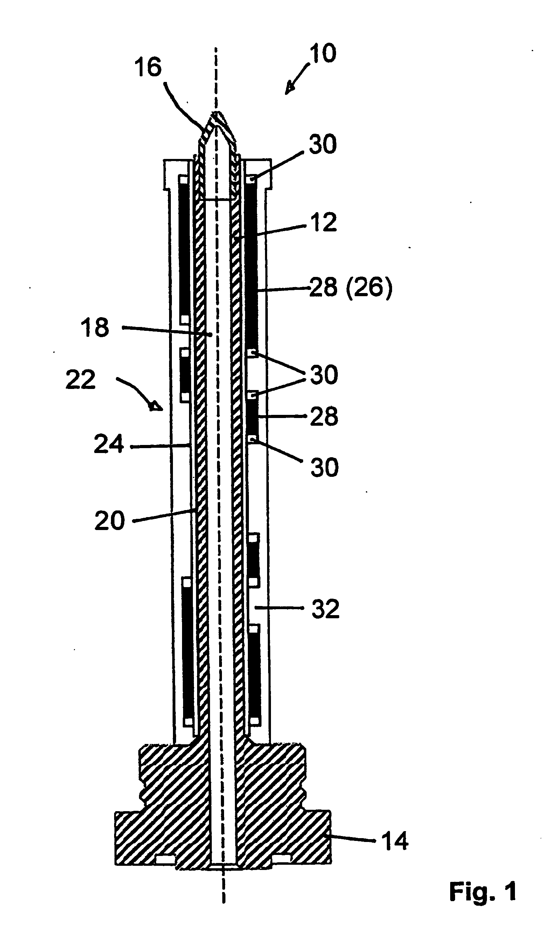

Fig. 1 zeigt eine schematische Schnittansicht einer Ausführungsform einer erfindungsgemäßen Heisskanaldüse 10. Die Heisskanaldüse 10 umfasst als Bestandteil einer Spritzgussanlage für die thermoplastische Kunststoffverarbeitung zur Festlegung an einem (nicht dargestellten) Verteiler ein (ebenfalls nicht gezeigtes) Gehäuse, in das ein insgesamt zylindrisches Materialrohr 12 einsetzbar ist. Ein einteilig mit diesem Materialrohr 12 ausgebildeter Sockel 14 schließt bündig mit dem Gehäuse ab und liegt dichtend an dem Verteiler an. In das sich in Axialrichtung längs erstreckende Materialrohr 12 ist endseitig eine Düsenspitze 16 eingesetzt, vorzugsweise eingeschraubt, die den in dem Materialrohr 12 ausgebildeten Strömungskanal 18 bis an die (nicht dargestellte) Ebene eines (ebenfalls nicht sichtbaren) Formnests fortsetzt. Die Düsenspitze 16 kann auch bei gleicher Funktionsweise mit dem Materialrohr 12 einstückig ausgebildet sein.

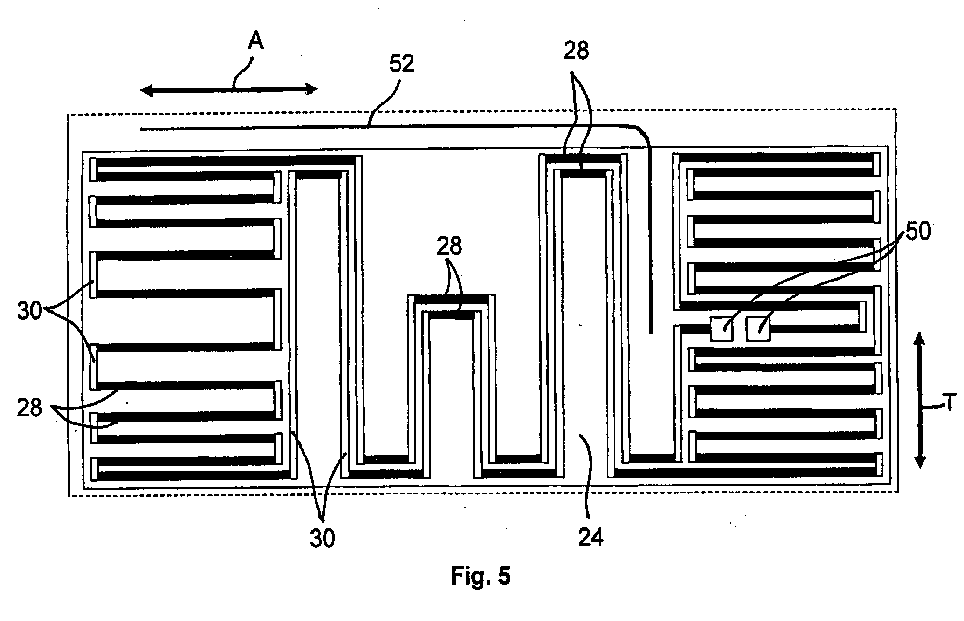

Auf dem Umfang der Wandung 20 des aus Stahl gefertigten Materialrohrs 12 ist eine Heizung 22 aufgebracht. Diese Heizung 22 ist als Flachschichtheizung ausgebildet mit einer unmittelbar auf dem Metall aufgebrachten keramischen Dielektrikumschicht 24 als Isolationsschicht, einer darüber aufgebrachten Heizschicht 26, die, wie es in Fig. 1 schematisch angedeutet ist, Heizleiterbahnen 28 und leitende Bahnen 30 aufweist, sowie einer äußeren Abdeckschicht 32, welche die Heizleiterbahnen 28, die leitenden Bahnen 30 und die darunter liegende Dielektrikumschicht 24 nach außen hin abdeckt und elektrisch isoliert. Die Heizleiterbahnen 28 erstrecken sich dabei im Wesentlichen in axialer Richtung des Materialrohrs 12, während sich die leitenden Bahnen 30 im Wesentlichen tangential, d. h. in Umfangsrichtung erstrecken, was genauer in den Fig. 5, 8 und 9 dargestellt ist und nachfolgend näher erläutert wird. Die genaue Anordnung der Heizleiterbahnen 28 in axialer Richtung ist zur Anpassung an den lokalen Wärmezufuhrbedarf beliebig gestaltbar. Hierdurch lässt sich eine definierte Temperaturverteilung innerhalb des Materialrohrs 12 erzielen.

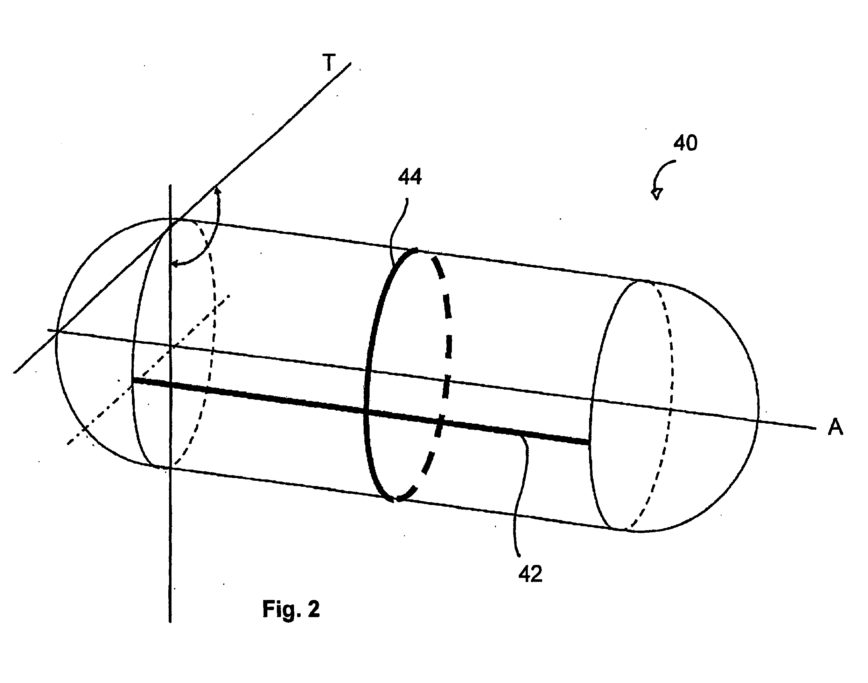

Der Grund dafür, dass die Heizleiterbahnen 28 in axialer Richtung und die leitenden Bahnen 30 in tangentialer Richtung angeordnet sind, wird nachfolgend unter Bezugnahme auf die Fig. 2 bis 4 näher erläutert.

Beim Spritzgussvorgang dehnt sich durch den Innendruck das Materialrohr 12 der in Fig. 1 dargestellten Heisskanaldüse 10 aus. Diese Ausdehnung überträgt sich auch auf die Dielektrikumschicht 24, auf die Heizschicht 26 mit den in dieser angeordneten Heizleiterbahnen 28 und leitenden Bahnen 30 sowie auf die Abdeckschicht 32.

Die durch die Ausdehnung induzierten Spannungen auf die über dem Materialrohr 12 angeordneten Schichten in tangentialer und axialer Richtung können im übertragenen Sinne auch mit Spannungen auf Schweißnähte eines unter Druck stehenden Dampfkessels verglichen werden. Ein solcher ist in Fig. 2 dargestellt und allgemein mit der Bezugsziffer 40 bezeichnet, wobei schematisch eine in axioler Richtung A verlaufende Längsnaht 42 und eine in tangentialer Richtung I verlaufende Rundnaht 44 eingezeichnet ist. Die Kesselformel sagt aus, dass die Spannungen in einer geschweißten Längsnaht 42 (Spannung senkrecht zur Längsnaht 42 in tangentialer Richtung T) doppelt so groß ist wie die in einer geschweißten Rundnaht 44 (Spannung senkrecht zur Rundnaht 44 in axialer Richtung A). Das bedeutet, dass in tangentialer Richtung T ausgebildete Rundnähte 44 bzw. Heizleiterbahnen entsprechend weitaus stärker mechanisch belastet werden, was zu einer schnelleren Alterung und somit auch zu einem früheren Ausfall derselben führen kann.

Betrachtet man nun zusätzlich die thermische Auswirkung der Ausdehnung auf die Heizschicht 26, so wird durch das Ausdehnen des Materiatrohrs 12 eine in Umfangsrichtung bzw. tangentialer Richtung T verlaufende Heizleiterbahn im Vergleich zu einer sich axial erstreckenden Heizleiterbahn verlängert, was zu einem höheren Widerstand der tangential verlaufenden Heizleiterbahn führt und entsprechend zu einem höheren Spannungsabfall und höherer Leistung. Damit wird eine tangentiale Heizleiterbahn stärker erwärmt und erreicht entsprechend eine höhere Temperatur. Weiterhin kann der Ausdehnungsvorgang auch zur Mikroquerausbildung in der Heizleiterbahn führen, was wiederum zu einer Widerstandserhöhung und somit lokalen Erwärmung führen kann, welche die Alterung der Heizschicht 26 beschleunigt.

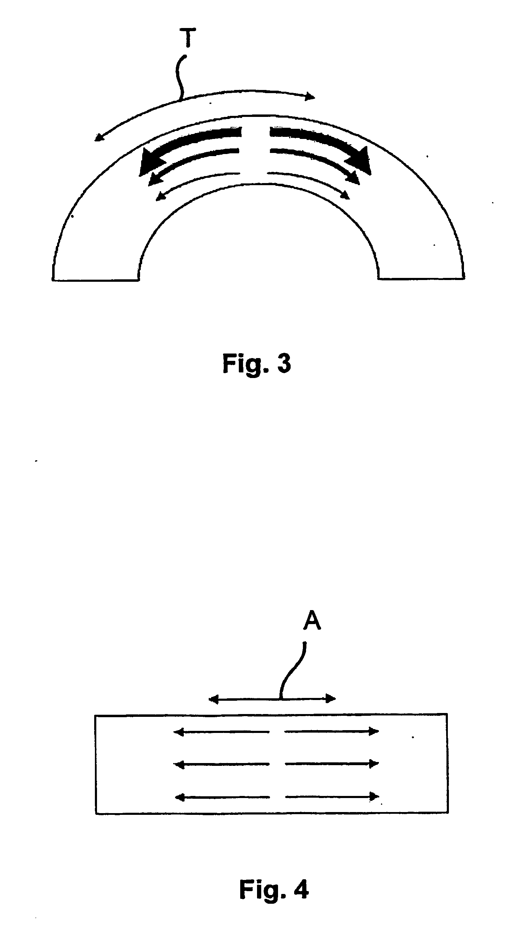

Ein weiterer Unterschied zwischen sich tangential und axial erstreckenden Heizleiterbahnen besteht darin, dass auf die Dielektrikumschicht 24 in tangentialer Richtung T über den Dickenverlauf unterschiedliche Kräfte wirken, während die Kräfte in axialer Richtung über die Dicke annähernd gleich bleiben, was schematisch in den Fig. 3 und 4 dargestellt ist.

Um den zuvor erläuterten Belastungszuständen der Heizschicht 26 während eines Spritzgießvorgangs Rechnung zu tragen, sind die Heizleiterbahnen 28, also diejenigen Bahnen, die aktiv zur Erwärmung des Materialrohrs 12 beitragen, in axialer Richtung A ausgebildet und werden entsprechend nur geringführig belastet. Die sich in axialer Richtung A erstreckenden Heizleiterbahn 28 werden miteinander mithilfe von leitenden Bahnen 30 verbunden, die sich im Wesentlichen in tangentialer Richtung T erstrecken und entsprechend größeren Belastungen standhalten müssen. Die leitenden Bahnen 30 weisen jedoch verglichen mit den Heizleiterbahnen 28 einen geringeren elektrischen Widerstand auf, weshalb während des Spritzgussbetriebs nur eine geringe Erwärmung in den leitenden Bahnen 30 stattfindet. Diese tragen entsprechend nur sekundär zur Erwärmung des Materialrohrs 12 bei. Der geringere elektrische Widerstand kann durch einen Werkstoff mit geringerem spezifischen Widerstand und/oder dadurch realisiert werden, dass der Querschnitt der leitenden Bahnen 30 größer als derjenige der Heizleiterbahn 28 gewählt wird.

Aufgrund des geringeren elektrischen Widerstandes der leitenden Bahnen 30 wird der Einfluss der thermischen Auswirkung auf diese maßgeblich verringert, so dass die zuvor beschriebenen Probleme einer höheren Temperatur und gegebenenfalls einer Mikroquerrissbildung verhindert werden, was einem frühzeitigen Ausfall der Heizschicht 26 entgegenwirkt.

Eine Ausführungsform einer Heizschicht 26 der erfindungsgemäßen Heisskanaldüse 10 ist schematisch in abgewickelter Form in Fig. 5 dargestellt. Bei dieser Ausführungsform erstreckt sich die Dielektrikumschicht 24 über das gesamte (in Fig. 5 nicht dargestellte) Materialrohr 12. Auf der Dielektrikumschicht 24 sind in axialer Richtung A eine Vielzahl von Heizleiterbahnen 28 angeordnet, die über Anschlusspads 50 mit elektrischer Energie versorgt werden. Die Anschlusspads 50 sind in der Draufsicht quadratisch ausgebildet, wobei die Übergänge zwischen den Heizleiterbahnen 28 und den Anschlusspads 50 möglichst gerade und senkrecht ausgebildet sind, was der Realisierung einer möglichst homogenen Stromverteilung dient. Alternativ können die Anschlusspads 50 aber auch andere Formen aufweisen, beispielsweise Formen mit Rundungen, wobei jedoch bevorzugt keine Rundungen im Übergangsbereich zwischen einem Anschlusspad 50 und einer Heizleiterbahn 28 vorhanden sind.

Die Heizleiterbahnen 28, die zum Erwärmen des Materialrohrs 12 dienen, sind anwendungsspezifisch entsprechend dem lokalen Wärmezufuhrbedarf über der Dielektrikumschicht 24 verteilt. Um eine homogene Wärmeverteilung zu erzielen, werden die Abstände zwischen den Heizleiterbahnen 28 links und rechts in Fig. 5 zur Mitte hin immer größer, da die Heizleiterbahnen 28, die von anderen Heizleiterbahnen 28 umgeben sind, ansonsten durch die umgebende Leistungszufuhr durch die anderen Heizleiterbahnen 28 auf einem höheren Temperaturniveau liegen würden.

Die einzelnen Heizleiterbahnen 28 sind durch leitende Bahnen 30 miteinander verbunden, die sich vorliegend in tangentialer Richtung erstrecken. Der elektrische Widerstand der leitenden Bahnen 30 ist geringer als derjenige der Heizleiterbahnen 28, so dass die Temperaturbelastung der leitenden Bahnen 30 geringer als diejenige der Heizleiterbahnen 28 ist. Auf diese Weise werden die zuvor beschriebenen höheren Beanspruchungen in tangentialer Richtung T, die auf die leitenden Bahnen 30 wirken, kompensiert, wodurch die Lebensdauer der leitenden Bahnen 30 erhöht wird. Die Heizleiterbahnen 28, die sich in axialer Richtung A erstrecken, sind hingegen, wie es zuvor beschrieben wurde, wesentlich geringeren Belastungen ausgesetzt, weshalb ein Versagen der Heizleiterbahnen 28 während des Betriebs der Heisskanaldüse 10 nicht zu befürchten ist. Der geringere elektrische Widerstand der leitenden Bahnen 30 kann erzielt werden, indem für die leitenden Bahnen 30 ein Werkstoff mit geringerem spezifischen Widerstand gewählt wird und/oder indem der Querschnitt der leitenden Bahnen 30 größer als derjenige der Heizleiterbahnen 28 gewählt wird.

Ferner umfasst die Heizschicht 26 einen Temperatursensor 52, der die Temperatur an der Düsenspitze 16 der Heisskanaldüse 10 erfasst.

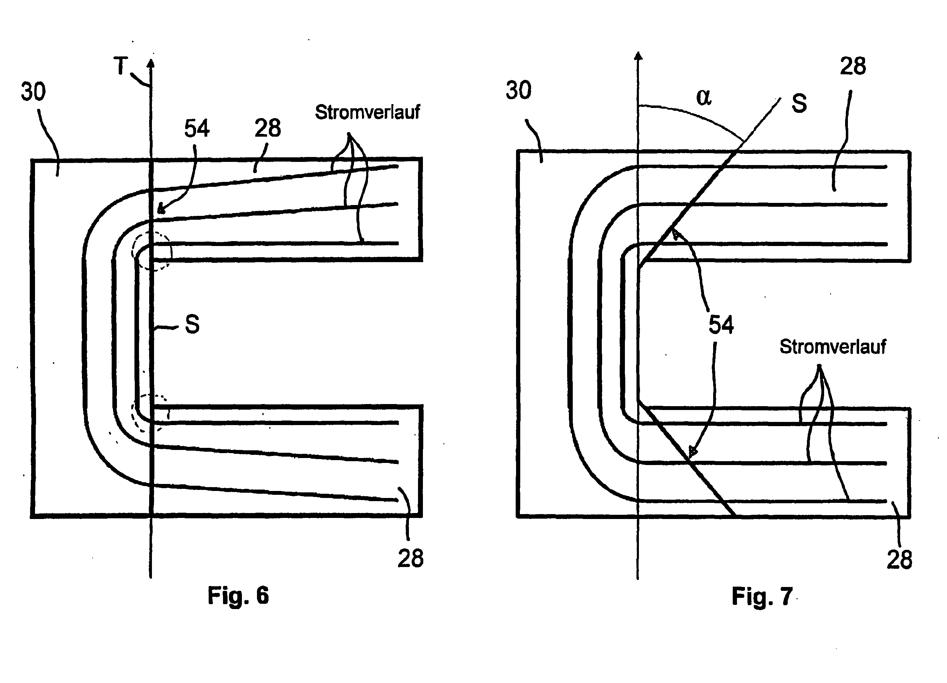

Die Fig. 6 und 7 zeigen schematisch Übergangsvarianten zwischen parallel angeordneten Heizleiterbahnen 28 und diese verbindenden leitende Bahn 30. Fig. 6 zeigt schematisch die Verteilung der Stromdichte für den Fall, dass die Übergänge 54 fluchtend auf einer sich in tangentialer Richtung T erstreckenden Linie liegen, die durch das Bezugszeichen S bezeichnet ist. Dabei zeigt sich, dass die Stromdichte in Richtung der inneren Ecke des Übergangs zunimmt, da der Strom den Weg des geringsten Widerstandes nimmt. Je geringer die Leitfähigkeit der leitenden Bahnen 30 ist, desto höher ist die relative Stromdichte in diesem Bereich. Diese inhomogene Stromverteilung kann wiederum die Bildung von so genannten "Hot Spots" in den durch die gestrichelten Kreislinien in Fig. 6 gekennzeichneten Bereichen verursachen, wodurch eine frühzeitige Alterung der Heizschicht 26 eintreten kann.

Um eine solche inhomogene Leistungsverteilung zu kompensieren, werden die Übergänge 54 zwischen den leitenden Bahnen 30 und den Heizleiterbahnen 28 erfindungsgemäß bevorzugt in einem Winkel α schräg zur Tangentialrichtung T ausgebildet, wie es in Fig. 7 dargestellt ist. Der Winkel α beträgt dabei vorzugsweise in Abhängigkeit von der Leitfähigkeit der leitenden Bahn zwischen 0° und 40°. Auf diese Weise kann die Bildung von Hot Spots sicher verhindert werden. An dieser Stelle sei angemerkt, dass die Übergänge 56 nicht unbedingt als Geraden ausgelegt sein müssen. Alternativ können sie auch auf eine Kurvenform aufweisen. Wichtig ist nur, dass die Übergänge 54 so ausgelegt sind, dass sie sich von der inneren Ecke des Übergangs nach Außen hin stetig in Richtung Heizbahn ziehen.

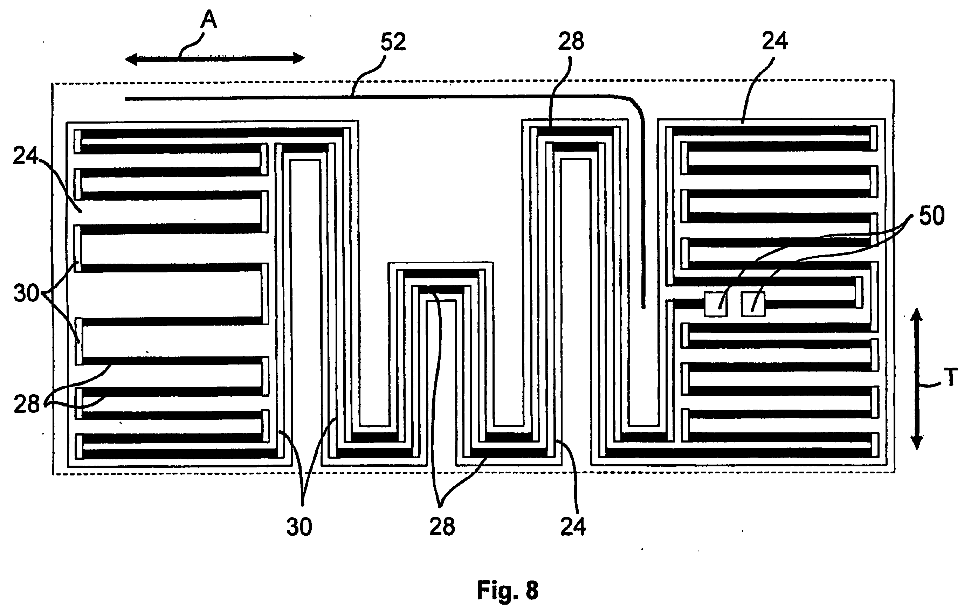

Fig. 8 zeigt eine schematische Ansicht einer weiteren Ausführungsform einer Heizschicht 26 der erfindungsgemäßen Heisskanaldüse 10. Diese Ausführungsform unterscheidet sich von der in Fig. 5 dargestellten Ausführungsform dahingehend, dass die Dielektrikumschicht 24 nicht auf dem gesamten Materialrohr 12 der Heisskanaldüse aufgetragen ist, sondern nur auf entsprechenden Bereichen unterhalb der Heizleiterbahnen 28 und der leitenden Bahnen 30. Auf diese Weise kann Material, das zur Ausbildung der Dielektrikumschicht 24 erforderlich ist, eingespart werden. Ferner kann in Abhängigkeit von dem verwendeten Herstellungsverfahren der Dielektrikumschicht 24 die Prozessdauer verkürzt werden.

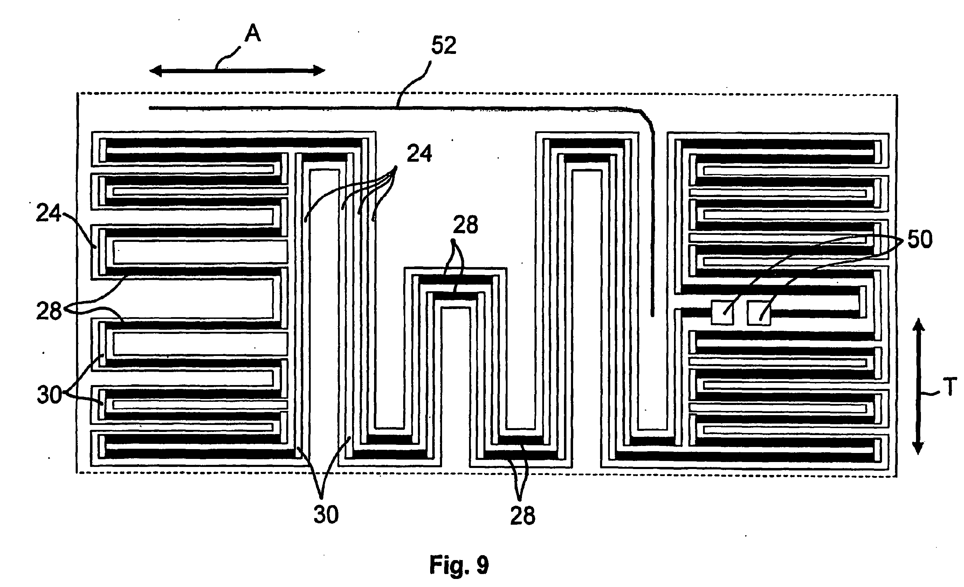

Eine weitere Ausführungsform einer Heizschicht 26 der erfindungsgemäßen Heisskanaldüse ist schematisch in Fig. 9 gezeigt. Diese Ausführungsform unterscheidet sich von der in Fig. 8 dargestellten Ausführungsform dahingehend, dass die Dielektrikumschicht 24 vollständig dem Verlauf der Heizleiterbahnen 28 und der leitenden Bahnen 30 folgt, wobei die Breite der Dielektrikumschicht 24 vorliegend doppelt so groß ist wie diejenige der Heizleiterbahnen 28 und der leitenden Bahnen 30. Durch diese Ausgestaltung der Dielektrikumschicht 24 lässt sich der Materialbedarf und ggf. die Prozessdauer bei der Herstellung derselben noch weiter verringern.

Es sollte klar sein, dass die zuvor beschriebenen Ausführungsformen der vorliegenden Erfindung nicht einschränkend sind. Vielmehr sind Modifikationen und Änderungen möglich, ohne den Schutzbereich der vorliegenden Erfindung zu verlassen, der durch die beiliegenden Ansprüche definiert ist.

Insbesondere kann die Heizung 22 in Fig. 1 auch getrennt von dem Materialrohr 12 vorgesehen sein. Beispielsweise kann die Dielektrikumschicht 24 als Hülse, insbesondere als Keramikrohr ausgebildet sein, wobei auf die Hülse die Heizleiterbahnen 28, die leitenden Bahnen 30 und die Abdeckschicht 32 aufgetragen sind.

Zum Auftragen der Heizleiterbahnen 28 der leitenden Bahnen 30 und der Abdeckschicht 32 kann wiederum beispielsweise ein Direktbeschichtungsverfahren verwendet werden.

Eine weitere Ausführungsform der Erfindung sieht vor, dass die Isolationsbahnen der Isolationsschicht 24 in den der Träger bzw. das Materialrohr 12 eingelassen sind, so dass die Heizvorrichtung im Wesentlichen bündig mit dem Materialrohr 12 abschließt. Letzteres ist hierzu mit (nicht dargestellten) Nuten versehen.

Gemäß einer noch anderen Ausführungsform kann man die leitenden Bahnen 30 als Drahtabschnitte ausbilden, die in Umfangsrichtung auf den Träger 12 bzw. auf die Isolationsschicht 24 aufgelegt und zwischen den Heizleiterbahnen 28 angelötet werden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Heisskanaldüse
- 12: Materialrohr
- 14: Sockel
- 16: Düsenspitze
- 18: Strömungskanal
- 20: Wandung
- 22: Heizung
- 24: Dielektrikumschicht
- 26: Heizschicht
- 28: Heizleiterbahnen
- 30: leitende Bahnen
- 32: Abdeckschicht
- 40: Dampfkessel
- 42: Längsnaht
- 44: Rundnaht
- 50: Anschlusspads
- 52: Temperatursensor
- 54: Übergang

- A: axiale Richtung
- α: Winkel
- T: tangentiale Richtung
- S: Fluchtlinie

## Patentansprüche

1. Elektrische Heizung (22) zum Erwärmen von im Wesentlichen zylindrischen Objekten (12), insbesondere zum Erwärmen von Heißkanaldüsen (10) für Heißkanalsysteme, mit wenigstens einem im Wesentlichen zylindrischen Träger und mit wenigstens einer auf dem Träger (12) aufgebrachten Heizleiterbahn (28), **dadurch gekennzeichnet, dass** sich jede Heizleiterbahn (28) im Wesentlichen in axialer Richtung (A) des Trägers (12) erstreckt, dass die Heizleiterbahnen (28) durch leitende Bahnen (30) elektrisch miteinander verbunden sind, wobei sich jede leitende Bahn (30) im Wesentlichen in tangentialer Richtung (T) des Trägers (12) erstreckt, und dass die leitenden Bahnen (30) einen geringeren elektrischen Widerstand aufweisen als die Heizleiterbahnen (28).

2. Heizung (22) nach Anspruch 1, **dadurch gekennzeichnet, dass** die leitenden Bahnen (30) aus einem Material hergestellt sind, das einen geringeren spezifischen Widerstand aufweist als derjenige der Heizleiterbahnen (28).

3. Heizung (22) nach Anspruch 1 oder 2, **dadurch gekennzeichnet, dass** die leitenden Bahnen (30) einen größeren Querschnitt aufweisen als die Heizleiterbahnen (28).

4. Heizung (22) nach Anspruch 3, **dadurch gekennzeichnet, dass** die Übergänge (54) zwischen den Heizleiterbahnen (28) und den leitenden Bahnen (30) in einem Winkel (α) schräg zur Axialrichtung (A) ausgebildet sind.

5. Heizung (22) nach einem der vorhergehenden Ansprüche, **dadurch gekennzeichnet, dass** der jeweilige Abstand zwischen benachbart angeordneten Heizleiterbahnen (28) derart gewählt ist, dass zur Erzielung einer homogenen Wärmeverteilung in dem zu erwärmenden Objekt (12) eine inhomogene Leistungsverteilung verwendet wird.

6. Heizung (22) nach einem der vorhergehenden Ansprüche, **dadurch gekennzeichnet, dass** der Träger rohrförmig ausgebildet ist.

7. Heizung (22) nach einem der vorhergehenden Ansprüche, **dadurch gekennzeichnet, dass** der Träger ein Materialrohr (12) ist oder bildet.

8. Heizung (22) nach einem der vorhergehenden Ansprüche, **dadurch gekennzeichnet, dass** auf dem Träger wenigstens eine Isolationsschicht (24) aufgebracht ist.

9. Heizung (22) nach Anspruch 8, **dadurch gekennzeichnet, dass** sich die Isolationsschicht (24) in Bahnen unterhalb der Heizleiterbahnen (28) und der leitenden Bahnen (30) erstreckt.

10. Heizung (22) nach einem der Ansprüche 8 oder 9, **dadurch gekennzeichnet, dass** die Isolationsbahnen stoffschlüssig auf dem Träger aufgebracht sind.

11. Heizung (22) nach einem der Ansprüche 8 bis 10, **dadurch gekennzeichnet, dass** die Heizleiterbahnen (28) und die leitenden Bahnen (30) stoffschlüssig auf den Isolationsbahnen aufgebracht sind.

12. Heizung (22) nach einem der Ansprüche 8 bis 11, **dadurch gekennzeichnet, dass** die Heizleiterbahnen (28), die leitenden Bahnen (30) und/oder die Isolationsschicht (24) bzw. die Isolationsbahnen mittels Dickschichttechnik oder mittels Lasersintem auf dem Träger aufgebracht sind.

13. Heizung (22) nach einem der Ansprüche 8 bis 12, **dadurch gekennzeichnet, dass** die Isolationsschicht (24) eine Dielektrikumsschicht ist.

14. Heißkanaldüse (10) mit einer Heizung nach einem der Ansprüche 1 bis 13.

15. Spritzgießvorrichtung mit wenigstens einer Heißkanaldüse (10) nach Anspruch 14.

## Claims

1. Electric heater device (22) to heat basically cylindrical objects (12), in particular to heat hot nozzles (10) for hot runner systems, with at least one basically cylindrical carrier and with at least one heat conductor strip (28) deposited on the carrier (12), **characterized in that** each heat conductor strip (28) basically stretches in axial direction (A) over the carrier (12), the heat conductor strips (28) are electrically connected to each other by conducting strips (30) with each such conducting strip (30) basically stretching in tangential direction (T) over the carrier (12), and that the conducting strips (30) show less electric resistance than the heat conductor strips (28).

2. Heating device (22) according to Claim 1, **characterized in that** the conducting strips (30) are made of a material of less specific resistance than that of the heat conductor strips (28).

3. Heating device (22) according to Claim 1 or 2, **characterized in that** the conducting strips (30) have a larger cross-section than the heat conductor strips (28).

4. Heating device (22) according to Claim 3, **characterized in that** the junctions (54) between the heat conductor strips (28) and the conducting strips (30) are formed at an angle (α) diagonal to the axial direction (A).

5. Heating device (22) according to one of the preceding Claims, **characterized in that** the respective distance between neighbouring heat conductor strips (28) is chosen such that to receive a homogeneous heat distribution within the object (12) to be heated an inhomogeneous power distribution is applied.

6. Heating device (22) according to one of the preceding Claims, **characterized in that** the carrier is of tubular design.

7. Heating device (22) according to one of the preceding Claims, **characterized in that** the carrier is or forms a material-made tube (12).

8. Heating device (22) according to one of the preceding Claims, **characterized in that** at least one insulating layer (24) is deposited on the carrier.

9. Heating device (22) according to Claim 8, **characterized in that** the insulating layer (24) stretches in strips below the heat conductor strips (28) and the conducting strips (30).

10. Heating device (22) according to one of the Claims 8 or 9, **characterized in that** the insulating strips are deposited material-contacting on the carrier.

11. Heating device (22) according to one of the Claims 8 to 10, **characterized in that** the heat conductor strips (28) and the conducting strips (30) are deposited material-contacting on the insulating strips.

12. Heating device (22) according to one of the Claims 8 to 11, **characterized in that** the heat conductor strips (28), the conducting strips (30) and/or the insulating layer (24) respectively the insulating strips, are deposited on the carrier by thick-film technology or laser sintering.

13. Heating device (22) according to one of the Claims 8 to 12, **characterized in that** the insulating layer (24) is a dielectric layer.

14. Hot nozzle (10) with a heating device according to one of the Claims 1 to 13.

15. Injection moulding device with at least one hot nozzle (14) according to Claim 14.

## Revendications

1. Chauffage électrique (22) pour chauffer des objets (12) de forme en général cylindrique, en particulier pour chauffer des buses de canaux chauds (10) pour des systèmes de canaux chauds, avec au moins un porteur de forme en général cylindrique, et avec au moins une bande de conducteur chauffant (28) appliquée aux porteur (12), **caractérisé en ce que** chaque bande de conducteur chauffant (28) s'étend en général en direction axiale (A) du porteur (12), que les bandes de conducteur chauffant (28) sont électriquement raccordées l'une à l'autre par des pistes conductives (30) chacune de ces pistes conductives (30) s'étendant en général en direction tangentielle (T) du porteur (12), et que les pistes conductives (30) ont moins de résistance électrique que les bandes de conducteur chauffant (28).

2. Chauffage (22) selon la Revendication 1, **caractérisé en ce que** les pistes conductives (30) sont faites d'un matériel d'une résistance spécifique moins que celle des bandes de conducteur chauffant (28).

3. Chauffage (22) selon la Revendication 1 ou 2, **caractérisé en ce que** les pistes conductives (30) sont d'une coupe transversale plus large que celles des bandes de conducteur chauffant (28).

4. Chauffage (22) selon la Revendication 3, **caractérisé en ce que** les jonctions (54) entre les bandes de conducteur chauffant (28) et les pistes conductives (30) sont formées d'un angle (α) diagonal à la direction axiale (A).

5. Chauffage (22) selon une des revendications précédentes, **caractérisé en ce que** la distance respective entre les bandes de conducteur chauffant (28) arrangées de manière avoisinante est choisie telle que pour obtenir une distribution de chaleur homogène dans l'objet à chauffer (12) une distribution de puissance inhomogène est appliquée.

6. Chauffage (22) selon une des revendications précédentes, **caractérisé en ce que** le porteur est formé tubulaire.

7. Chauffage (22) selon une des Revendications précédentes, **caractérisé en ce que** le porteur est ou forme un tube en matériel (12).

8. Chauffage (22) selon une des revendications précédentes, **caractérisé en ce que** sur le porteur est appliquée au moins une couche d'isolement (24).

9. Chauffage (22) selon la Revendication 8, **caractérisé en ce que** la couche d'isolement (24) s'étend en bandes au-dessous des bandes de conducteur chauffant (28) et des pistes conductives (30).

10. Chauffage (22) selon une des Revendications 8 ou 9, **caractérisé en ce que** les bandes d'isolement sont appliquées sur le porteur de manière contactant le matériel.

11. Chauffage (22) selon une des Revendications 8 à 10, **caractérisé en ce que** les bandes de conducteur chauffant (28) et les pistes conductives (30) sont appliquées sur le porteur de manière contactant le matériel.

12. Chauffage (22) selon une des Revendications 8 à 11, **caractérisé en ce que** les bandes de conducteur chauffant (28), les pistes conductives (30), et/ou la couche d'isolement (24), respectivement les bandes d'isolement sont appliquées sur le porteur par technique des couches épaisses ou par frittage à laser.

13. Chauffage (22) selon une des Revendications 8 à 12, **caractérisé en ce que** la couche d'isolement (24) est une couche diélectrique.

14. Buse de canaux chauds (10) avec un chauffage selon une des Revendications 1 à 13.

15. Dispositif de moulage par injection avec au moins une buse de canaux chauds (10) selon la Revendication 14.
